Europäisches Patentamt

**European Patent Office**

Office européen des brevets

(11) Publication number: **0 180 536**
A2

(12) **EUROPEAN PATENT APPLICATION**

(21) Application number: 85630180.9

(22) Date of filing: 31.10.85

(51) Int. Cl.⁴: **C 09 D 3/80**, C 09 D 3/72,
C 08 G 18/72, B 05 D 7/16

(30) Priority: 01.11.84 US 667032

(43) Date of publication of application: 07.05.86
Bulletin 86/19

(84) Designated Contracting States: BE DE FR GB IT NL SE

(71) Applicant: INMONT CORPORATION, 1255 Broad Street,
Clifton New Jersey 07015 (US)

(72) Inventor: Beck, George G., 11033 Winslow Road,
Whitehouse Ohio 43571 (US)
Inventor: Griffis, Wade B., 7708 Aster Lane, S.W.,
Jenison, MI 49428 (US)

(74) Representative: Schmitz, Jean-Marie et al, Office
Dennemeyer S.à.r.l. 21-25 Allée Scheffer P.O. Box 41,
L-2010 Luxembourg (LU)

(54) Acrylic automotive refinish coating composition.

(57) An acrylic based coating composition particularly use-
ful as a clear automotive refinish paint has fast dust-free
times and good spraying solids content. The composition
comprises a copolymer of an alkyl acrylate or methacrylate,
a vinyl monomer, and an isocyanato alkyl methacrylate. This
copolymer when combined with a polyol, a suitable curing
catalyst and U. V. stabilizing compounds is particularly suit-
able as a clear coat applied over a previously applied color
layer in an automotive refinish operation.

- 1 -

Description

Acrylic Automotive Refinish
Coating Composition

Technical Field

The field of art to which this invention pertains is coating compositions, and particularly acrylic coating compositions for automotive refinish use.

Background Art

Conventional two-package clear urethane based coating refinish systems use a comparatively low molecular weight isocyanate reacted with a medium to low molecular weight copolymer of ethylenically unsaturated monomers and a monohydroxy alkyl monomethacrylate. These clear finishes have generally good properties for the refinishing of automobiles. However, such conventional systems suffer from disadvantages under certain unfavorable conditions occasionally found in the auto refinishing environment. For example, their low molecular weight, while providing a high solids content for spraying, tends to slow initial drying (dust free) time which can result in undesirable dirt pickup. To overcome this problem, conventional solution acrylic lacquers are sometimes used. But while these lacquers have short dust-free times, they have low solids content for spraying. Furthermore, a problem with the isocyanate-containing compositions mentioned above is that the inclusion of the low molecular weight isocyanates are thought to cause a greater health hazard than if medium or high molecular weight isocyanates could be used.

Accordingly, what is needed in this art is a coating composition particularly adapted for automotive refinish use which overcomes these problems.

Disclosure of Invention

The present invention is directed to an acrylic resin based coating composition particularly adapted to automotive refinish use. The composition comprises a copolymer of ethylenically unsaturated monomers and an isocyanato alkylmethacrylate reacted with a polyol cross-linking agent. The ethylenically unsaturated monomers typically comprise an alkyl acrylate or methacrylate and a vinyl unsaturation containing compound. The polyol cross-linking agent is typically added to the copolymer in conjunction with a curing catalyst and ultraviolet light stabilizing compounds.

Another aspect of the invention is a method of coating a metal substrate with the above composition by combining the copolymer with the cross-linking agent prior to application and curing the applied coating under ambient conditions, and the resultant coated article.

Both the composition and method are particularly useful as part of a multicoat coating system in colorless form applied over a previously applied color layer.

- 3 -

These and other features and advantages of the present invention will become more apparent from the following description.

Best Mode For Carrying Out The Invention

The alkyl group in the alkyl acrylate or alkyl methacrylate according to the present invention can be methyl, ethyl, propyl, butyl, isopropyl, isobutyl etc. The preferred material is methyl methacrylate. Mixtures of the above materials, for example butyl methacrylate and methyl methacrylate (e.g. 20% to 25% butyl and 55% to 60% methyl) can also be used. The preferred vinyl unsaturation containing monomer is preferably a vinyl aromatic compound such as styrene or vinyl toluene. The alkyl groups on the isocyanato alkyl methacrylate can be the same as recited above. The preferred isocyanato material is isocyanato ethyl methacrylate.

Useful cross-linking polyols include the various glycols, such as ethylene glycol, propylene glycol, neopentyl glycol, butylene glycol, 1,4 butanediol, hexylene glycol, 1-hexanediol, the polyglycols such as diethylene glycol or triethylene glycol, etc; the triols such as glycerine, trimethylol ethane, trimethylol propane, etc., and other higher functional alcohols such as pentaerythritol, sorbitol, mannitol, as well as alkyds, polyesters, and acrylic copolymers, with hydroxyl functionality, and the like. Tone™ polycaprolactone polyols (Union Carbide Corporation) are particularly preferred.

In preparing the acrylic copolymer the alkyl acrylate or methacrylate is preferably used at about 30% to about 90% by weight of the copolymer (typically 50% to 80%, and preferably 75% or 80%) with the isocyanato alkyl methacrylate representing up to 20% by weight of the copolymer (although in some instances it may be used as high as 70%) and preferably up to 10% by weight. The balance of the copolymer can be any vinyl unsaturation containing monomers and is preferably a vinyl aromatic such as styrene or vinyl toluene. Styrene is a particularly preferred component because of the hardness, gloss and compatability in solution it provides to the copolymer when combined with the polyol composition. Typically the styrene is present at about 10% by weight, the alkyl acrylate or methacrylate is present at about 80% by weight with the isocyanato compound representing about 10% by weight. Also present in the copolymer composition is a vinyl polymerization initiator such as VAZO™ 67 (E. I. Dupont de Nemours & Co.). This is typically used in relatively large amounts (e.g. up to about 10% by weight and typically up to about 5% by weight based on weight of copolymer components) to keep the molecular weight relatively low.

The copolymer typically has a relatively low molecular weight, e.g. approximately 20,000 number average molecular weight. The molecular weight is controlled so that the polymer flows out sufficiently to form an attractive coating, while maintaining durable properties after application.

The compositions are typically prepared in two parts for combination just prior to application. The first part represents the acrylic copolymer portion. The second part is represented by the polyol cross-linking agent and various additives.

The polyol composition can comprise any cross-linking polyol as described above. In addition, the polyol portion typically contains ultraviolet light screening agents, absorbers, or stabilizers, (which for simplicity will be referred to collectively as stabilizers) such as, TINUVIN® 328 or 292 (Cibo-Geigy Corp.) substituted hydroxyphenyl benzotriazoles and hindred amine light stabilizers. In addition, an organic solvent soluble curing catalyst is also used in the polyol portion of the composition. This catalyst is typically an organometallic compound containing an alkyl group (methyl, ethyl, propyl, butyl, etc.), a metal (zinc, tin, etc.) and a fatty-acid ester group (laurate, oleate, etc.). Dibutyl tin dilaurate is particularly preferred.

Sufficient polyol is typically used to provide adequate hardness and gloss properties. Sufficient ultraviolet stabilizing agents are used to impart color stability to the layer upon which the coating composition is to be applied, as well as providing stability to the clear, acrylic copolymer-polyol combination itself. And sufficient curing catalyst is used to provide cure in a reasonable period of time. Typically the polyol is present (by weight based on total reactants) in an amount of about 10% to about 25%, preferably 15% to about 20%, the U. V. agents up to about 8%, preferably up to about 4%, and the catalyst up to about 0.1% and preferably up to about 0.03%. The individual components are shelve stable, i.e. do not react upon storage over long periods of time. Both compositions are prepared in conventional organic paint solvents including aromatic solvents such as toluene, xylene, etc., aliphatic and hydrocarbon solvents, esters and ketones, etc. Typically, prior to combination, the copolymer composition is present in the solvent at about 55% to about 65% by weight; and about 10% to about 40% (preferably about 25% to about 35%) after combination with the cross-linking portion.

After mixing, the coating composition is ready for application. Although the composition is particularly suitable for application to metal substrates, and as a refinish composition for automobile substrates in particular, it can of course be used on other substrates such as plastic and flexible rubber as well. Also, while the composition may contain coloring agents, it is preferably used as a clear composition to provide protection and luster to a previously applied color coat.

The coating composition according to the present invention can be applied on top of a dry base coat film (pigmented or unpigmented) of any commercial lacquer such as Alpha Cryl® acrylic (Inmont Corporation). Note also commonly assigned copending U. S. Patent application serial number 518,583 filed July 29, 1983, the disclosure of which is incorporated by reference, which discloses other typical base coats in this art. Although the coating

- 7 -

is specifically designed for ambient (room temperature) cure, cure of course can be accelated through the application of heat.

### EXAMPLE

A copolymer according to the present invention was prepared as follows:

| Part 1 | Grams |
|---|---|
| toluene | 480 |
| methyl ethyl ketone | 160 |

Bring to reflux.

| Part 2 | Grams |
|---|---|
| methyl methacrylate | 1280 |
| styrene | 160 |
| isocyanato ethyl methacrylate | 160 |
| toluene | 160 |
| methyl ethyl ketone | 160 |
| Vazo 67 | 64 |

Part 1 is added to Part 2 over a two-hour period, then held for thirty minutes. Continue to reflux.

| Part 3 | Grams |
|---|---|
| Vazo 67 | 16 |
| toluene | 160 |

Add Part 3 to Parts 1 and 2 over a 30 minute period and then held for two hours. Continue to reflux.

- 8 -

The resulting solution had a 62.7% nonvolatiles content, a 98% conversion and a viscosity of $Z_3/Z_4$, Gardener Holt, at 25°C.

| Part 4 | Grams | Resin | Solvent |
|---|---|---|---|
| Reaction product of | | | |
| Parts 1 & 2 & 3 | 136 | 85 | 51 |
| toluene | 44 | | 44 |
| butyl acetate | 43 | | 43 |
| | | | |
| Total | 223 | 85 | 138 |

| Part 5 | Grams | Resin | Misc. | Solvent |
|---|---|---|---|---|
| Tone 0200 | 15.00 | 15 | | |
| propylene glycol methyl ether acetate | 43.00 | | | 43 |
| methyl ethyl ketone | 29.00 | | | 29 |
| Tinuvin 328 | 2.00 | | 2 | |
| Tinuvin 292 | 2.00 | | 2 | |
| dibutyl tin dilaurate | 0.02 | | | |
| | | | | |
| Total | 91.02 | 15 | 4 | 72 |

Mix Parts 4 and 5 and then the composition is ready for use and has the following constants:

| nonvolatiles | 32.50% |
| #4 Ford cup viscosity @ 25°C | 13 in. |
| Tinuvin 328 and 292 | 2% each by weight based on binder |
| usable pot life | 1 hour |

This composition was sprayed on a dry (tack-free) film of a commercial acrylic lacquer, in this case Inmont Corporation's Alpha Cryl lacquer. Tack-free time was less than one-half hour. After 24 hours ambient cure the clear finish had a 20° gloss reading of 81, good hardness and was resistant to water and unleaded gasoline spot tests. Adhesion and exterior durability were excellent.

Although this invention has been shown and described with respect to detailed embodiments thereof, it will be understood by those skilled in the art that various changes in form and detail thereof may be made without departing from the spirit and scope of the claimed invention.

0180536

- 10 -

Claims

1. An acrylic coating composition particularly adapted to automotive refinish use comprising an acrylic copolymer comprising about 50% to about 80% by weight of an alkyl acrylate or alkyl methacrylate, up to 20% by weight of an isocyanato alkyl methacrylate, and the balance a vinyl unsaturation containing monomer, combined with a polyol cross-linking agent, a curing catalyst, and ultraviolet light stabilizing compounds.

2. The composition of claim 1 wherein the acrylate or methacrylate is methyl methacrylate present in an amount of about 80% by weight, the isocyanato compound is isocyanato ethyl methacrylate present in an amount of about 10% by weight, and the vinyl monomer is styrene in an amount of about 10% by weight.

3. The composition of claim 1 wherein the acrylate or methacrylate is methyl methacrylate present in an amount of about 75% by weight, the isocyanato compound is isocyanato ethyl methacrylate present in an amount of about 15% by weight, and the vinyl monomer is styrene in an amount of about 10% by weight.

0180536

- 11 -

4. The composition of claim 1 wherein the alkyl acrylate or alkyl methacrylate comprises a mixture of 20% to 25% butyl methacrylate and 55% to 60% methyl methacrylate based on total weight of the copolymer.

5. The composition of claim 2 wherein the ultraviolet light stabilizing coumpounds are selected from the group consisting of substituted hydroxyphenyl benzotriazoles and hindred amines, and the curing catalyst is dibutyl tin dilaurate.

6. A method of coating a metal substrate comprising admixing a copolymer comprising about 50% to about 80% by weight of an alkyl acrylate or alkyl methacrylate with up to about 20% by weight of an isocyanato alkyl methacrylate and the balance a vinyl unsaturation containing monomer, with a polyol cross-linking agent, a curing catalyst and ultraviolet light stabilizing compounds, applying a layer of the composition to a metal substrate, and curing the applied composition.

7. The method of claim 6 wherein the copolymer is admixed with the cross-linking agent, curing catalyst, and ultraviolet light stabilizing compounds just prior to application.

- 12 -

8.   The method of claim 6 wherein the acrylate or methacrylate is methyl methacrylate present in an amount of about 80% by weight, the isocyanato compound is isocyanato ethyl methacrylate present in an amount of about 10% by weight, and the vinyl monomer is styrene in an amount of about 10% by weight.

9.   The method of claim 6 wherein the acrylate or methacrylate is methyl methacrylate present in an amount of about 75% by weight, the isocyanato compound is isocyanato ethyl methacrylate present in an amount of about 15% by weight, and the vinyl monomer is styrene in an amount of about 10% by weight.

10.  The method of claim 6 wherein the acrylate or methacrylate comprises a mixture of 20% to 25% butyl methacrylate and 55% to 60% methyl methacrylate based on total weight of the copolymer.

11.  The method of claim 6 wherein the ultraviolet light stabilizing compounds are selected from the group consisting of substituted hydroxyphenyl benzotriazoles and hindred amines, and the curing catalyst is dibutyl tin dilaurate.

12.  The method of claim 6 wherein the metal substrate has a layer of polymer previously applied to it.

13. The method of claim 12 wherein the polymer is pigmented.

14. A metal substrate coated with an acrylate copolymer comprising about 50% to about 80% by weight of an alkyl acrylate or alkyl methacrylate, up to 20% by weight of an isocyanato alkyl methacrylate, and the balance a vinyl unsaturation containing monomer, combined and reacted with a polyol cross-linking agent, a curing catalyst, and ultraviolet light stabilizing compounds.

15. The coated metal substrate of claim 14 wherein the copolymer is admixed with the cross-linking agent, curing catalyst, and ultraviolet light stabilizing compounds just prior to application.

16. The coated metal substrate of claim 14 wherein the acrylate or methacrylate is methyl methacrylate present in an amount of about 80% by weight, the isocyanato compound is isocyanato ethyl methacrylate present in an amount of about 10% by weight, and the vinyl monomer is styrene in an amount of about 10% by weight.

17. The coated metal substrate of claim 14 wherein the acrylate or methacrylate is methyl methacrylate present in an amount of about 75% by weight, the isocyanato compound is isocyanato ethyl methacrylate present in an amount of about 15% by weight, and the vinyl monomer is styrene in an amount of about 10% by weight.

18. The coated metal substrate of claim 14 wherein the acrylate or methacrylate comprises a mixture of 20% to 25% butyl methacrylate and 55% to 60% methyl methacrylate based on total weight of the copolymer.

19. The coated metal substrate of claim 14 wherein the ultraviolet light stabilizing compounds are selected from the group consisting of substituted hydroxyphenyl benzotriazoles and hindred amines, and the curing catalyst is dibutyl tin dilaurate.

20. The coated metal substrate of claim 14 wherein the metal substrate has a layer of polymer previously applied to it.